Europäisches Patentamt

(19) European Patent Office

Office européen des brevets

(11) EP 0 858 060 A1

(12) **EUROPEAN PATENT APPLICATION**

(43) Date of publication:
12.08.1998 Bulletin 1998/33

(51) Int. Cl.⁶: **G08B 5/22**

(21) Application number: 98101890.6

(22) Date of filing: 04.02.1998

(84) Designated Contracting States:
AT BE CH DE DK ES FI FR GB GR IE IT LI LU MC NL PT SE
Designated Extension States:
AL LT LV MK RO SI

(30) Priority: 07.02.1997 JP 38520/97

(71) Applicant: NEC CORPORATION
Tokyo (JP)

(72) Inventor: Nakamura, Atsunori
Minato-ku, Tokyo (JP)

(74) Representative:
Baronetzky, Klaus, Dipl.-Ing. et al
Patentanwälte
Dipl.-Ing. R. Splanemann, Dr. B. Reitzner, Dipl.-Ing. K. Baronetzky
Tal 13
80331 München (DE)

(54) **Pager apparatus and method of controlling a display of a cursor**

(57) A track-ball for operating a cursor is equipped on a rear surface of a pager apparatus and an operating button for defining a letter and so forth to be input is placed on a display section side, and wherein by moving the pager apparatus on a plane surface, the cursor of the display section is moved in a direction same as a direction of movement of a main body, and after selecting a letter of a line of letters to be input that are being displayed, a selected letter is defined by the operating button.

FIG.6

15 BUTTON

HAPPY BIRTHDAY
TO YOU _

ABCDEFGHIJKLMOP
QRSTUVWXYZ,./?<>

13
DISPLAY SECTION

UPPER PART OF APPARATUS

10 BALL

PART EXPOSED TO EXTERIOR

LOWER PART OF APPARATUS

## Description

### BACKGROUND OF THE INVENTION

The present invention relates to a pager apparatus, and more particularly to a pager apparatus which is equipped with a multi-functional mouse type operating section capable of displaying multiple figures and multiple rows.

In a conventional pager apparatus, a display section for displaying a reception message and so forth is provided on one surface of a casing of the pager apparatus, and operating means necessary for using the pager apparatus is constructed so that operating buttons are placed, to which individual functions are pre-assigned.

Also, in a pager apparatus having a function capable of inputting literal information, since it is necessary to operate buttons while confirming an input condition by means of a display section, buttons for inputting letters are constructed to be disposed on the same certain surface of a display surface, and construction is adopted in which a kind of operating buttons is concentrated and placed on the display surface.

The conventional pager apparatus is equipped with operating buttons on a surface on which a display section of a main body is placed, and since it is necessary to maintain space in which such operating buttons are placed, this point has been main cause hindering actualization of a smaller-sized main body of the pager apparatus or a larger-sized display section.

Also, in a pager apparatus capable of displaying a cursor, since it is necessary to arrange an operating button for operating the cursor on a display section from an operational point of view, the apparatus has had the same problem with respect to actualization of a smaller-sized main body of the pager apparatus or a larger-sized display section.

Further, a conventional pager apparatus requires a troublesome operation since an operating button should be pushed one time letter by letter in an operation of moving a cursor for a selection of letters, and also, an apparatus adopting a scroll technique requires skill by a user since in order to stop a cursor at arbitrary letters, an operation is needed in which relation with a moving speed of the cursor is taken into account.

### SUMMARY OF THE INVENTION

The objective of the present invention is to provide an pager apparatus or a method of controlling a display of a cursor in a pager apparatus capable of realizing the apparatus of smaller size or a display section of larger size while improving operational efficiency by a user.

The objective of the present invention is achieved by a pager apparatus having a display section capable of displaying multiple figures and multiple rows. The pager apparatus includes a track-ball, and control means for controlling movement of a cursor of the display section based on a rotational direction and an amount of rotation of a ball in the track-ball.

Moreover, the objective of the present invention is achieved by a pager apparatus which is characterized in that a track-ball is provided in the pager apparatus having a display section capable of displaying multiple figures and multiple rows and in that an operation of a cursor on the display section by means of the track-ball is realized.

Especially, it is preferable that the above-described track-ball is provided on an opposite side of the display section or at a corner portion in a casing of the pager apparatus.

In an arrangement in which the above-described track-ball is provided on the opposite side of the display section in the casing of the pager apparatus, it is preferable to control a display so that in case of using the pager apparatus by moving it on a plane surface, with respect to movement of the cursor, the cursor is moved in a direction same as a direction of movement of a main body of the pager apparatus.

Further, a function is provided which is capable of displaying a reception message of a picture or figure type, or deleting, making a copy of or moving the displayed message. It is also preferable to make it possible that a line of letters on the display section is displayed, the displayed letters are selected by the cursor, and by means of an operating button, the letter at a position where the cursor is displayed or the function is defined or executed, respectively.

The objective of the present invention is achieved by a pager apparatus having a display section capable of displaying multiple figures and multiple rows. The pager apparatus includes a track-ball provided on a surface opposite to a surface on which the display section is provided of surfaces of a casing of the pager apparatus, detection means for detecting a rotational direction and an amount of rotation of a ball in the track-ball, and control means for, based on information from the detection means, controlling so that when a main body of the pager apparatus is moved on a plane surface and the track-ball is rotated, the cursor on the display section moves in a direction same as a movement direction of the main body.

Moreover, the objective of the present invention is achieved by a pager apparatus having a display section capable of displaying multiple figures and multiple rows. The pager apparatus includes a track-ball provided at a corner portion in a casing of the pager apparatus, detection means for detecting a rotational direction and an amount of rotation of a ball in the track-ball, and control means for, based on information from the detection means, controlling so that when a main body of the pager apparatus is moved and the track-ball is rotated, the cursor on the display section moves in a direction same as a movement direction of the main body.

Further, the objective of the present invention is achieved by a method of controlling a display of a cursor in a pager apparatus having a display section capable of displaying multiple figures and multiple rows. The method includes steps of providing a track-ball in the pager apparatus, detecting a rotational direction and an amount of rotation of the track-ball, and controlling a display of the cursor on the display section based on a detected rotational direction and a detected amount of rotation of the track-ball.

## BRIEF DESCRIPTION OF THE DRAWINGS

This and other objects, features and advantages of the present invention will become more apparent upon a reading of the following detailed description and drawings, in which:

Fig. 1 is a view showing an arrangement of a track-ball used for a pager apparatus of the present invention;
Fig. 2 is a block diagram showing control of a cursor display on a display section by means of a track-ball of the present invention;
Fig. 3 is a block diagram of a control section 14;
Fig. 4 is a flowchart for explaining a method of detecting a rotation of a track-ball;
Fig. 5 is a pulse timing diagram for explaining a method of detecting a rotation of a track-ball;
Fig. 6 is a view showing a pager apparatus of a first embodiment of the present invention;
Fig. 7 is a view showing a modified example of the first embodiment of the present invention;
Fig. 8 is a view showing a pager apparatus of a second embodiment of the present invention; and
Fig. 9 is a view showing a modified example of the second embodiment of the present invention.

## DESCRIPTION OF THE EMBODIMENTS

Embodiments of the present invention will be explained in detail referring to Figures.

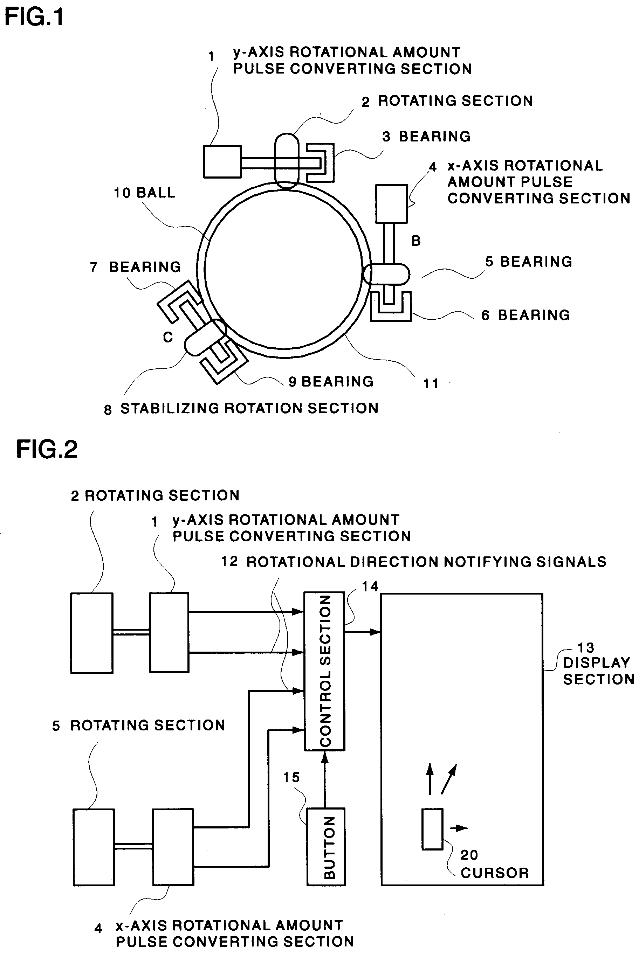

Fig. 1 is a view showing an arrangement of a track-ball used for a pager apparatus of the present invention which is equipped with a mouse.

The structure of a track-ball section that is used in the pager apparatus of the present apparatus has a ball 10 that is positioned at a boundary of an outer wall of a casing of the pager apparatus and that is held in the interior of a casing opening section 11 with a part of the ball exposed from the casing opening section.

The arrangement of the whole track-ball is constructed of a first rotation detecting mechanism that is disposed on a rotating axis A of which one end is supported by a bearing 3 and the other end is coupled to a y-axis rotational amount pulse converting section 1 and that has a rotating section 2 for rotating in contact with a surface of the above-described ball 10, a second rotation detecting mechanism that is disposed on a rotating axis B of which one end is supported by a bearing 6 and the other end is coupled to an x-axis rotational amount pulse converting section 4 and that has a rotating section 5 for rotating in contact with the surface of the above-described ball 10, the rotating axis B being orthogonal to the rotating axis of the first rotation mechanism, and a stabilizing rotation mechanism for smoothing a rotation of the above-described ball 10, disposed on a rotating axis of which either ends are supported by bearings 7 and 9 and having a stabilizing rotation section 8 for rotating in contact with the surface of the above-described ball 10, and the arrangement of the whole track-ball is constructed so that the above-described ball 10 is supported by the above-described three rotating sections 2, 5 and 8, and has detecting mechanisms placed so as to detect amounts of rotation along an x-axis direction and a y-axis direction of the above-described ball 10.

Also, the rotating axes of the above-described first and second rotation detecting mechanisms are placed so that the directions of the rotating axes are orthogonal to each other, and the y-axis rotational amount pulse converting section 1 and the x-axis rotational amount pulse converting section 4 coupled to each rotating axis detect a rotational orthogonal component of the rotation of the above-described ball and output rotational direction notifying signals for indicating a rotational direction and rotational amount signals. Especially, the rotational amount signals are output as pulse signals in which the rotational amount is converted into the pulse number.

Fig. 2 is a block diagram showing control of a cursor display on a display section by means of the above-described track-ball. In the Figure, as mentioned above, the y-axis and x-axis rotational amount pulse converting sections 1 and 4 coupled to the rotating sections 2 and 5 output the rotational direction notifying signals for indicating a rotational direction or movement direction along the x-axis and y-axis and the pulse signals during respective rotations.

Both of the above-described output signals are input to a control section 14, and the control section counts the pulse signals per unit time, converts the respective counted signals into voltage signals, detects a movement direction, an amount of movement and a movement speed of a main body of the pager apparatus based on the voltage signals and the above-described rotational direction notifying signals, and converts the detected movement direction, amount of movement and movement speed into values of co-ordinates on the x-axis and y-axis to calculate values of co-ordinates corresponding to the movement of the main body.

The track-ball shown in Fig. 1 and the calculation of the value of co-ordinates by the block diagram shown in Fig. 2 will be explained more particularly. If the main body moves upwardly in the Figure, since only the rotating section 2 rotates, information corresponding to a movement direction and distance of the movement of the main body is acquired from the y-axis rotational amount pulse converting section 1. Also, if the main body moves along a direction at 45° right-upwardly in the Figure, the rotating section 2 and the rotating section 5 rotate by the same amount and information corresponding to a movement direction and distance of the movement of the main body is acquired from the x-axis and y-axis rotational amount pulse converting sections. For the movement of the main body in an arbitrary direction, information about a distance on the x-axis and y-axis and a movement direction is acquired from each of the rotational amount pulse converting sections, and if the information about the distance is assumed to be X and Y, an amount of movement L can be calculated as $L=(X^2+Y^2)^{1/2}$.

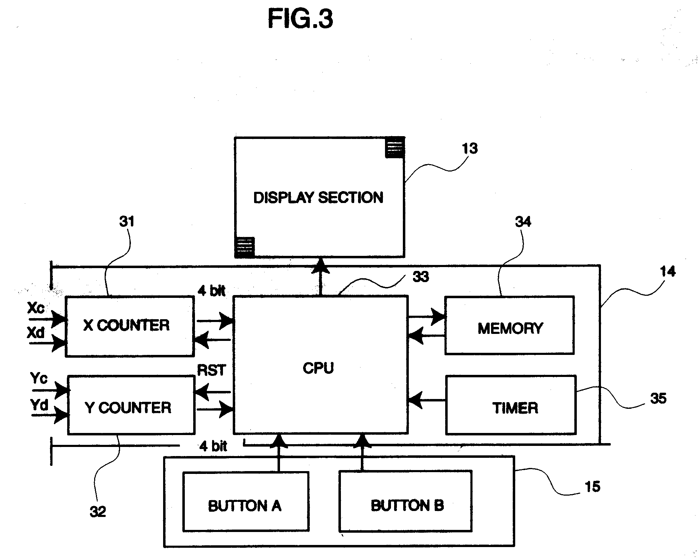

Further, the control section 14 will be explained more in detail by referring to Fig. 3.

In Fig. 3, a reference numeral 31 indicates an X-counter, a reference numeral 32 indicates a Y-counter, a reference numeral 33 is a CPU, a reference numeral 34 indicates a memory, a reference numeral 35 indicates a timer, and a reference numeral 13 indicates a display section. The control section 14 is constructed by the X-counter 31, the Y-counter 32, the CPU 33, the memory 34 and the timer 35.

The rotational direction notifying signals Xc and Xd output from the x-axis rotational amount pulse converting section 4 are input to the X-counter 31, and the X-counter 31 counts these signals Xc and Xd and notifies a counted result to the CPU 33.

The rotational direction notifying signals Yc and Yd output from the y-axis rotational amount pulse converting section 1 are input to the Y-counter 32, and the Y-counter 32 counts these signals Yc and Yd and notifies a counted result to the CPU 33.

Based on a notified counted value, the CPU 33 updates a display position of the cursor of the display section 13.

The timer 35 generates an updating operation trigger for the CPU 33.

The memory 34 is for storing an updated value of co-ordinates of the cursor.

The operation of these elements will be explained below.

The x-axis rotational amount pulse converting section 4 generates the rotational direction notifying signals Xc and Xd and these rotational direction notifying signals Xc and Xd are input to the X-counter 31, and the X-counter 31 counts the input pulse signals and outputs a counted result to the CPU 33.

The y-axis rotational amount pulse converting section 1 generates the rotational direction notifying signals Yc and Yd and these rotational direction notifying signals Yc and Yd are input to the Y-counter 32, and the Y-counter 32 counts the input pulse signals and outputs a counted result to the CPU 33.

The CPU 33 analyzes 4-bit signals input from the X-counter 31 and Y-counter 32 in accordance with the operation trigger periodically generated by the timer 35 and calculates and updates the value of co-ordinates of the cursor to be displayed on the display section 13. Also, the calculated value of co-ordinates is stored in the memory 34.

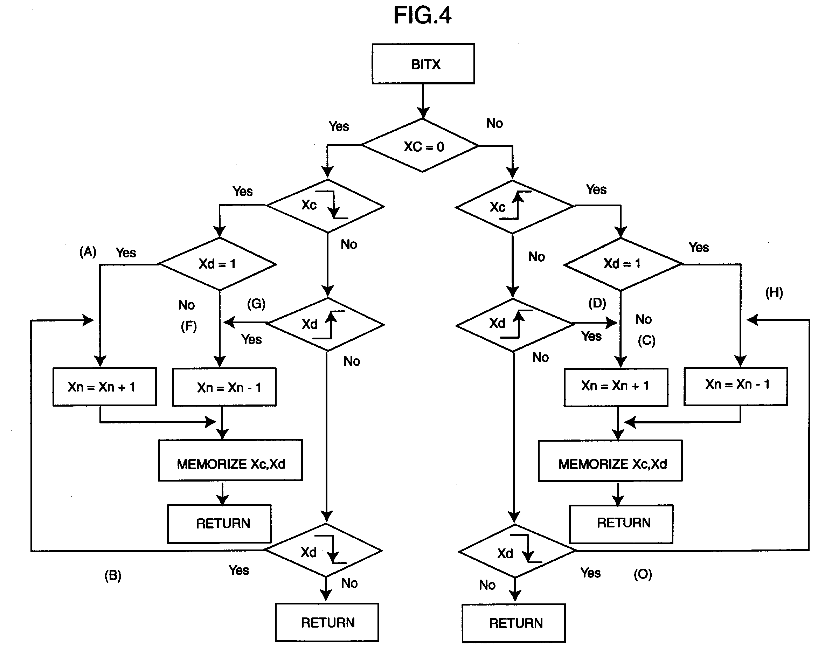

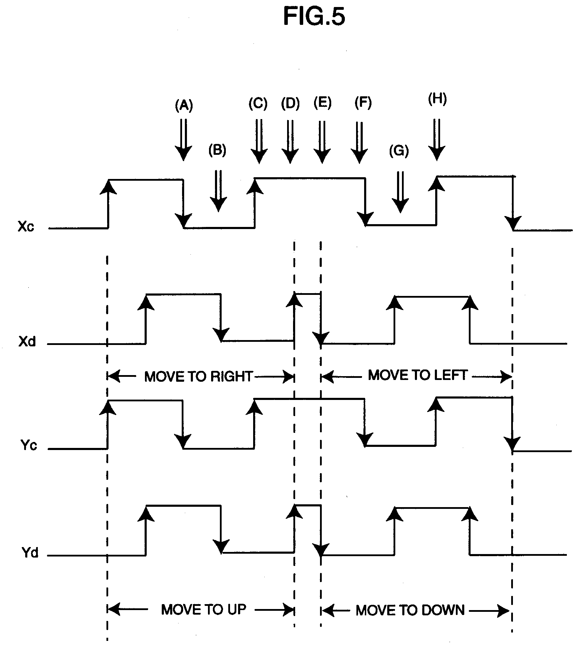

Next, the above-mentioned operation will be explained more in detail by referring to a flowchart shown in Fig. 4 and a pulse timing diagram shown in Fig. 5. It is noted that a symbol of an alphabet in Fig. 4 indicates timing in Fig. 5. Also, in order to make the explanation to be understood easily, the operation will be explained by paying attention to only an X-axis.

At first, the rotational direction notifying signals Xc and Xd are input to the X-counter 31, which are generated from the x-axis rotational amount pulse converting section 4 by means of the rotation of the track-ball. It is then determined whether the rotational direction notifying signal Xc is zero, and if the rotational direction notifying signal Xc is zero, it is determined whether the rotational direction notifying signal Xc goes down. If the signal goes down, it is determined whether a value of the rotational direction notifying signal Xd is one, and if the value is one, a value of the counter is increased by one, and if the value of the rotational direction notifying signal Xd is zero, the value of the counter is decreased by one. And then, the next rotational direction notifying signal Xc is determined.

The rotational direction notifying signal Xc is then zero and does not go down, it is determined whether the rotational direction notifying signal Xd goes up. If the rotational direction notifying signal Xd goes up, the value of the counter is decreased by one, and if the rotational direction notifying signal Xd goes down, the value of the counter is increased by one. If the rotational direction notifying signal Xd does not go up and go down, the next rotational direction notifying signal Xc is determined.

Also, the rotational direction notifying signal Xc is not zero, it is determined whether the rotational direction notifying signal Xc goes up. If the rotational direction notifying signal Xc goes up, it is determined whether a value of the rotational direction notifying signal Xd is one. If the value is one, the value of the counter is decreased by one, and if the value of the rotational direction notifying signal Xd is zero, the value of the counter is increased by one. In addition, if the rotational direction notifying signal Xd does not go up and go down, the next rotational direction notifying signal Xc is determined.

Next, the display section 13 displays, based on the output values of co-ordinates from the control section 14, a cursor at a position corresponding to the above-described values of co-ordinates. Also, a button 15 of the control section 14 is mainly used for defining, by means of application of a pressure, an input and so forth of a letter or item in a part where the cursor is being displayed.

In a preferable embodiment of the present invention, the above-mentioned track-ball is equipped on a rear surface side of the pager apparatus, and a display control section (not shown in the Figures) is disposed in the main body and the display control section conducts a cursor display in the display section in accordance with the above-described values of co-ordinates corresponding to the movement direction and amount of movement of the track-ball. Further, the above-described display control section has a simplified control function of a word processor in connection with a reception signal and operation of the button, such as a display of literal information of a reception message, a display of a line of letters of a letter to be input, a picture letter and so forth, control of a selection and definition of letters and so forth from the line of letters, and a copy and input of a letter.

In a method of operating the pager apparatus of this embodiment, a cursor position is determined by moving the main body on a plane shaped surface with the display section placed upward. In this case, with respect to control of the cursor, the cursor is controlled so as to move in a direction same as a movement direction of the main body. Also, as for other operations and control of this pager apparatus, the pager apparatus has a function for displaying a reception message of a long sentence as well as a simple sentence over multiple figures and multiple rows on the display section and also enables a message of a picture or figure type to be displayed. Further, it is possible to make a composition by displaying a line of letters of an input object or a line of letters for a sentence with a definite form and a line of letters of an input object on the display section, selecting a letter from the line of the input object letter by letter by means of the track-ball, and defining the selected letter by pushing a definition operating button. It is also possible to delete, make a copy of or move a received message or an input line of letters using the track-ball.

In this pager apparatus, it is possible to make the operating button used for a selection and definition of a letter and so forth, and execution of a selected function to be minimized, resulting in accomplishment of the display section of larger size and the main body of smaller size.

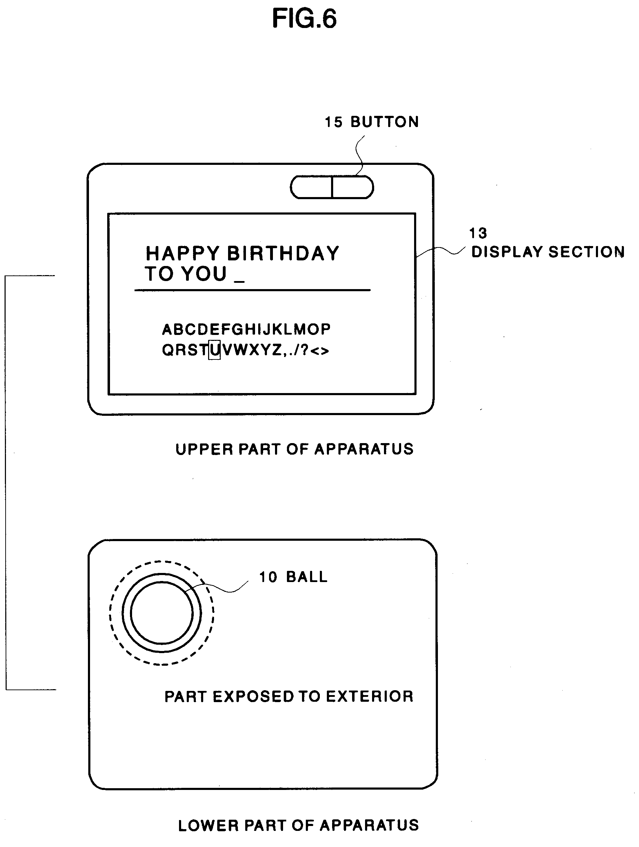

Fig. 6 is a view showing a pager apparatus which is equipped with a track-ball of a particular first embodiment of the present invention.

In this embodiment, a minimum operating button for an input and definition and so forth is placed on an upper surface of the main body of the pager apparatus, and the above-described track-ball is provided on a rear surface of the main body of the pager apparatus, thereby minimizing the operating button to accomplish the display section of larger size or the main body of smaller size. A method of using this pager apparatus is as follows:

First, the main body of the pager apparatus is placed on a plane surface with the display section 8 oriented upward, the main body is moved while adjusting a position of the cursor of the display section 8 of the main body in a manner of operating a mouse with one hand or both hands, in order to move the cursor to a desire place, and a letter or item is defined by pushing the button 15. For a method of inputting a letter, for example, as shown in the Figure, after an operation for movement of the cursor while a series of letters in a line are displayed on the display section, a letter is defined and input by pushing the definition button 15. By repeating such an operation, a long sentence of a line of letters such as a name and address can be easily made.

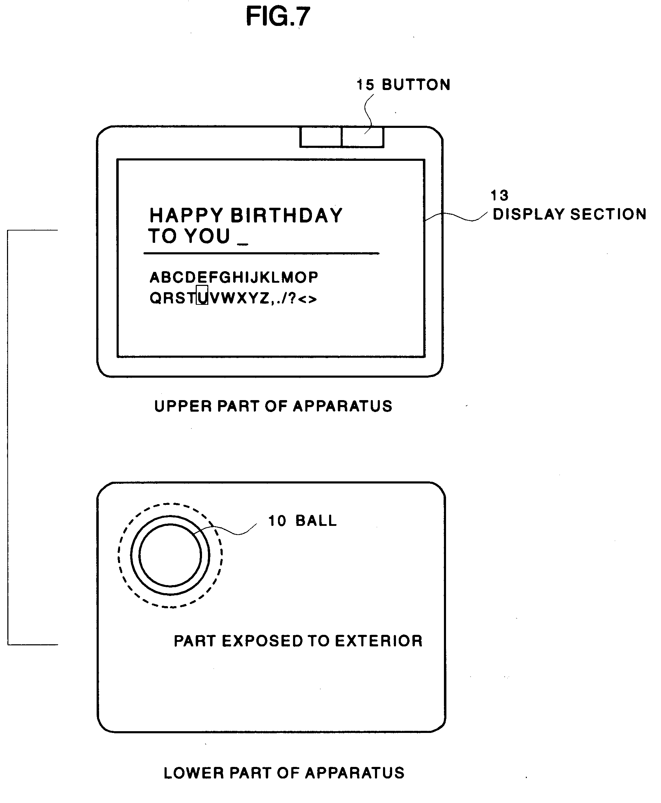

Fig. 7 is a view showing a modified example of the above-described embodiment. In a pager apparatus which is equipped with a track-ball like in Fig. 6, a structure is provided in which an operating button 15 is disposed at an end portion or on a side surface of a main body. In a method of using this embodiment, like one in Fig. 6, a main body of the pager apparatus is placed on a plane surface with a display section 13 oriented upward, and the pager apparatus is operated. For example, the main body is moved by holding side surfaces of the main body, a position of a cursor of the display section 13 is adjusted, and after the cursor is moved to a desire place, a letter or item is defined by pushing the button 15 placed on the side surface of the main body.

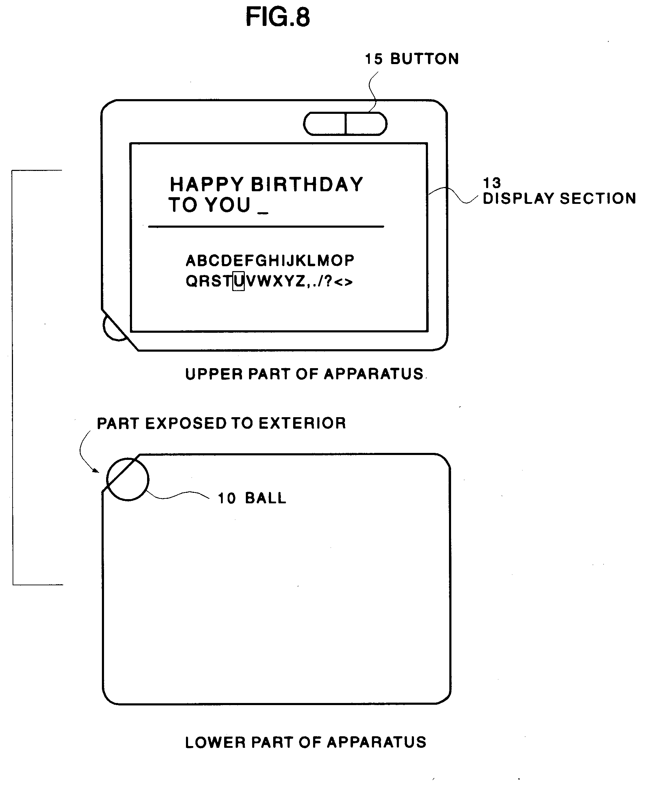

Fig. 8 is a view showing a second embodiment of the present invention. A track-ball for detecting an amount of movement and a movement direction of a main body is provided at a corner portion of the main body.

In a method of using a pager apparatus of this embodiment, a main body of the pager apparatus is supported with one hand or both hands so that a display section 13 can be seen from a user side, a ball section is operated to be rubbed against an object, and the main body is moved to adjust the movement of a cursor. After the cursor is moved to a desire place, a letter or item is defined by pushing a button 15.

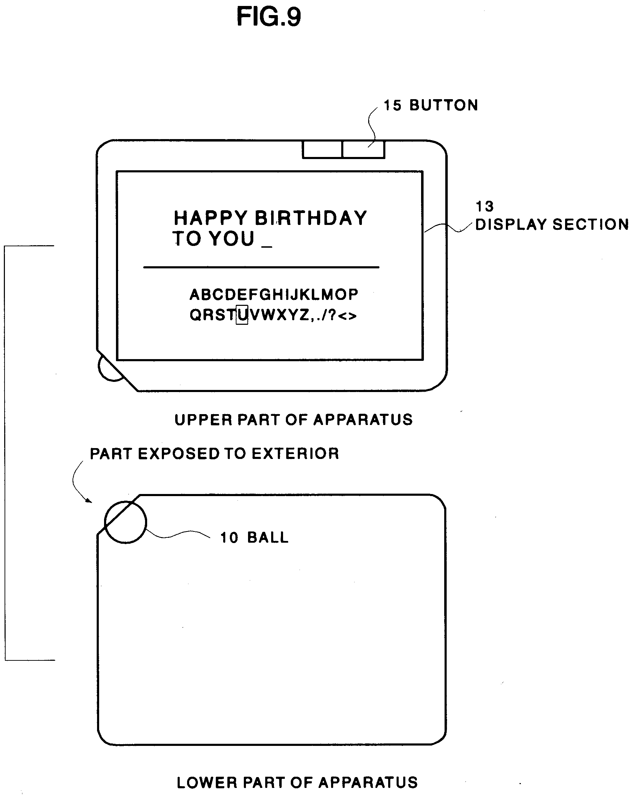

Fig. 9 is a view showing a modified example of the embodiment of Fig. 8. An operating button is provided at an end portion or on a side surface of a main body. Since the button 15 is positioned on the side surface, it is possible to accomplish a display section of much larger size or the main body of much smaller size.

In addition to the above-explained embodiments, an arrangement can be considered in which a track-ball is placed on a side surface and so forth of a casing of the apparatus.

Also, an optical type track-ball can be adopted as the track-ball. In this case, it become to be possible to fix a ball section to some extent, and instead of moving the cursor by means of the above-mentioned mouse type method, the ball is rotated by the hand and the cursor is moved in accordance with the rotation the ball. By adopting such an arrangement, the cursor can be moved by the track-ball without the plane surface, and it is extremely efficient in case that there are a lot of opportunities of using an apparatus such as a pager apparatus outdoor.

It is noted that, in case of adopting the optical type track-ball, as for a place where it is provided, as mentioned above, the track-ball may be provided on a rear surface side of the pager apparatus or at a corner portion of the pager apparatus.

In accordance with the pager apparatus of the present invention, since the track-ball is provided, even in the case that a lot of inputs of letters by means of a mouse type operating method are needed, an input can be quickly and simply conducted. Since it is not necessary to continuously operate the button especially in the case of selecting a letter or item, an effect is remarkable in that the input operation can be simply executed by the movement of the main body with one hand.

Also, in accordance with the present invention, the button to which a function for movement of a cursor is allocated can be eliminated, thereby it is possible to reduce an area of some part of the display section, which is efficient for magnifying an area of the display section. In other words, conventionally, four buttons for controlling up-and-down or right-and-left movement have been usually necessary for moving a cursor, and in taking account of a surface area of the pager apparatus to be originally small sized machinery and tools, a total area of the buttons becomes not to be negligible, and therefore, it is remarkably advantageous to a design including a size of an external form to be able to eliminate the four buttons.

**Claims**

1. A pager apparatus having a display section capable of displaying multiple figures and multiple rows comprising:

   a track-ball; and
   control means for controlling movement of a cursor of

      said display section based on a rotational direction and an amount of rotation of a ball in said track-ball.

2. A pager apparatus according to claim 1, wherein said track-ball is provided on a surface opposite to a surface on which said display section is provided of surfaces of a casing of said pager apparatus.

3. A pager apparatus according to claim 2, wherein a function operating button is provided on a surface of said casing other than said surface on which said track-ball is provided.

4. A pager apparatus according to claim 1, wherein said track-ball is provided at a corner portion in a casing of said pager apparatus.

5. A pager apparatus according to claim 4, wherein a function operating button is provided on a surface of said casing other than said corner portion at which said track-ball is provided.

6. A pager apparatus according to claim 2, wherein said control means controls so that when a main body of said pager apparatus is moved on a plane surface and said ball of said track-ball is rotated, said cursor on said display section moves in a direction same as a movement direction of said main body.

7. A pager apparatus according to claim 4, wherein said control means controls so that when said ball of said track-ball provided at said corner portion is rotated by moving a main body of said pager apparatus, said cursor on said display section moves in a direction same as a movement direction of said main body.

8. A pager apparatus according to claim 1, comprising display controlling means capable of displaying a reception message of a picture or figure type, or of deleting, making a copy of and moving a displayed reception message.

9. A pager apparatus according to claim 1, comprising means for displaying a line of letters on said display section, selecting a displayed letter by said cursor, and making a composition.

10. A pager apparatus according to claim 1, comprising an operating button for making it possible that a letter at a position where said cursor is displayed or a function is defined or executed.

11. A pager apparatus according to claim 1, said track-ball is an optical type track-ball.

12. A pager apparatus equipped with a mouse type operating section, which has a display section capable of displaying multiple figures and multiple rows, comprising a track-ball, wherein an operation of a cursor on said display section by means of said track-ball is realized.

13. A pager apparatus equipped with a mouse type operating section according to claim 12, wherein said track-ball is provided on a surface opposite to a surface on which said display section of a casing of said pager apparatus is provided.

14. A pager apparatus equipped with a mouse type operating section according to claim 12, wherein said track-ball is provided at a corner portion in a casing of said pager apparatus.

**15.** A pager apparatus having a display section capable of displaying multiple figures and multiple rows comprising:

a track-ball provided on a surface opposite to a surface on which said display section is provided of surfaces of a casing of said pager apparatus;

detection means for detecting a rotational direction and an amount of rotation of a ball in said track-ball; and

control means for, based on information from said detection means, controlling so that when a main body of said pager apparatus is moved on a plane surface and said track-ball is rotated, said cursor on said display section moves in a direction same as a movement direction of said main body.

**16.** A pager apparatus having a display section capable of displaying multiple figures and multiple rows comprising:

a track-ball provided at a corner portion in a casing of said pager apparatus;

detection means for detecting a rotational direction and an amount of rotation of a ball in said track-ball; and

control means for, based on information from said detection means, controlling so that when a main body of said pager apparatus is moved and said track-ball is rotated, said cursor on said display section moves in a direction same as a movement direction of said main body.

**17.** A method of controlling a display of a cursor in a pager apparatus having a display section capable of displaying multiple figures and multiple rows, said method comprising steps of:

providing a track-ball in said pager apparatus;

detecting a rotational direction and an amount of rotation of said track-ball; and

controlling a display of said cursor on said display section based on a detected rotational direction and a detected amount of rotation of said track-ball.

**18.** A method of controlling a display of a cursor in a pager apparatus according to claim 17, wherein in case that said track-ball is provided on a surface opposite to a surface on which said display section of a casing of said pager apparatus is provided, said controlling step is a step of controlling so that when a main body of said pager apparatus is moved on a plane surface and said track-ball is rotated, a display of said cursor on said display section moves in a direction same as a movement direction of said main body.

**19.** A method of controlling a display of a cursor in a pager apparatus according to claim 17, wherein in case that said track-ball is provided at a corner portion in a casing of said pager apparatus, said controlling step is a step of controlling so that when said track-ball provided at said corner portion is rotated by moving a main body of said pager apparatus, a display of said cursor on said display section moves in a direction same as a movement direction of said main body.

## FIG.1

1 y-AXIS ROTATIONAL AMOUNT PULSE CONVERTING SECTION

2 ROTATING SECTION

3 BEARING

4 x-AXIS ROTATIONAL AMOUNT PULSE CONVERTING SECTION

10 BALL

B

7 BEARING

5 BEARING

6 BEARING

C

9 BEARING

11

8 STABILIZING ROTATION SECTION

## FIG.2

2 ROTATING SECTION

1 y-AXIS ROTATIONAL AMOUNT PULSE CONVERTING SECTION

12 ROTATIONAL DIRECTION NOTIFYING SIGNALS

14

CONTROL SECTION

13 DISPLAY SECTION

5 ROTATING SECTION

15

BUTTON

20 CURSOR

4 x-AXIS ROTATIONAL AMOUNT PULSE CONVERTING SECTION

8

# FIG.3

# FIG.4

EP 0 858 060 A1

# FIG.5

EP 0 858 060 A1

# FIG.6

15 BUTTON

13
DISPLAY SECTION

HAPPY BIRTHDAY
TO YOU _

ABCDEFGHIJKLMOP
QRSTUVWXYZ,./?<>

UPPER PART OF APPARATUS

10 BALL

PART EXPOSED TO EXTERIOR

LOWER PART OF APPARATUS

# FIG.7

15 BUTTON

13
DISPLAY SECTION

HAPPY BIRTHDAY
TO YOU _

ABCDEFGHIJKLMOP
QRSTUVWXYZ,./?<>

**UPPER PART OF APPARATUS**

10 BALL

**PART EXPOSED TO EXTERIOR**

**LOWER PART OF APPARATUS**

# FIG.8

15 BUTTON

HAPPY BIRTHDAY
TO YOU _

ABCDEFGHIJKLMOP
QRSTUVWXYZ,./?<>

13
DISPLAY SECTION

UPPER PART OF APPARATUS

PART EXPOSED TO EXTERIOR

10 BALL

LOWER PART OF APPARATUS

# FIG.9

15 BUTTON

HAPPY BIRTHDAY
TO YOU _

ABCDEFGHIJKLMOP
QRSTUVWXYZ,./?<>

13
DISPLAY SECTION

UPPER PART OF APPARATUS

PART EXPOSED TO EXTERIOR

10 BALL

LOWER PART OF APPARATUS

European Patent
Office

**EUROPEAN SEARCH REPORT**

Application Number

EP 98 10 1890

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | WO 91 16771 A (MOTOROLA INC) 31 October 1991<br><br>* page 3, line 16 - line 29; figure 2 *<br>* page 4, line 10 - line 22; claim 11 *<br>--- | 1,2,6,<br>11-13,<br>15,17,18 | G08B5/22 |
| Y | US 5 379 030 A (NOLAN THOMAS R ET AL) 3 January 1995<br>* column 4, line 18 - column 5, line 19; figure 4 *<br>--- | 1,2,12,<br>13,15,17 | |
| Y | EP 0 594 460 A (NIPPON ELECTRIC CO) 27 April 1994<br>* column 6, line 12 - line 56; figure 11 *<br>--- | 1,2,6,<br>11,18 | |
| E | WO 98 06176 A (MOTOROLA INC) 12 February 1998<br>* abstract; figure 5 *<br>--- | 1 | |
| A | PATENT ABSTRACTS OF JAPAN<br>vol. 096, no. 007, 31 July 1996<br>& JP 08 063260 A (HITACHI LTD), 8 March 1996,<br>* abstract *<br>--- | 8-10 | **TECHNICAL FIELDS SEARCHED (Int.Cl.6)**<br><br>G08B<br>G06K |
| A | SAPASHE JR R ET AL: "ALPHA NUMERIC ENTRY FOR PERSONAL ORGANIZER PAGERS USING A MEMBRANE SLIDER SWITCH"<br>MOTOROLA TECHNICAL DEVELOPMENTS,<br>vol. 19, 1 June 1993,<br>pages 54-56, XP000361473<br>* the whole document *<br>--- | 8-10 | |
| A | WO 85 00234 A (MOUSE SYSTEMS CORP) 17 January 1985<br>* abstract; figure 4 *<br>--- | 11 | |
| | -/-- | | |

The present search report has been drawn up for all claims

| Place of search | Date of completion of the search | Examiner |
|---|---|---|
| BERLIN | 5 May 1998 | Breusing, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

# EUROPEAN SEARCH REPORT

Application Number

EP 98 10 1890

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | EP 0 582 150 A (EBAUCHESFABRIK ETA AG) 9 February 1994<br>* abstract; figure 1 *<br>--- | 1 | |
| A | WO 91 04640 A (MOTOROLA INC) 4 April 1991<br>* page 2, line 10 - line 30; figure 2 *<br>--- | 1 | |
| A | GB 2 219 422 A (MULTITONE ELECTRONICS PLC) 6 December 1989<br>* abstract; figure 8 *<br>----- | | |

TECHNICAL FIELDS
SEARCHED     (Int.Cl.6)

The present search report has been drawn up for all claims

| Place of search | Date of completion of the search | Examiner |
|---|---|---|
| BERLIN | 5 May 1998 | Breusing, J |

EPO FORM 1503 03.82 (P04C01)